# EUROPÄISCHE PATENTSCHRIFT

(11) **EP 2 785 782 B1**
(45) Veröffentlichungstag und Bekanntmachung des Hinweises auf die Patenterteilung: **02.11.2016**
(21) Anmeldenummer: 12791796.1
(22) Anmeldetag: 30.11.2012
(51) Int. Cl.: C08K 5/42, C08K 7/14, C08L 69/00

(54) **UV-STABILISIERTE, GLASFASERVERSTÄRKTE, FLAMMGESCHÜTZTE POLYCARBONATE FÜR DEN EE- UND IT-BEREICH**
UV-STABILIZED, GLASS-FIBER REINFORCED, FLAME-RETARDANT POLYCARBONATES FOR THE EE AND IT SECTOR
POLYCARBONATES IGNIFUGES STABILISÉS AUX UV, RENFORCÉS DE FIBRES DE VERRE, POUR LES SECTEURS EE ET IT

(30) Priorität: 30.11.2011 EP 11191242
(43) Veröffentlichungstag der Anmeldung: 08.10.2014
(73) Patentinhaber: Covestro Deutschland AG, 51373 Leverkusen (DE)
(72) Erfinder: ERKELENZ, Michael, 47239 Duisburg (DE); FRANSSEN, Hans, 47809 Krefeld (DE); HEUER, Helmut Werner, 51371 Leverkusen (DE)
(74) Vertreter: Levpat
(86) Internationale Anmeldenummer: PCT/EP2012/074032
(87) Internationale Veröffentlichungsnummer: WO 2013/079633

(56) Entgegenhaltungen:
- US-A1- 2005 256 227
- US-A1- 2007 191 518
- US-A1- 2008 076 866

## Beschreibung

Die vorliegende Erfindung betrifft die Verwendung glasfaservertärkter Polycarbonatzusammensetzungen mit hoher Steifigkeit, verbessertem thermischen und rheologischem Verhalten in Kombination mit verbesserten Flammschutzeigenschaften und signifikant erhöhter VicatTemperatur zur Herstellung von dünnwandigen Gehäuseteilen oder Schalterkästen im EE-(Elektro/Elektronik) Bereich.

Diese Formmassen eignen sich für Bauteile, die bei einer Wandstärke von 1,2 mm bis 1,5 mm die Brandschutzklassifikation UL94 V0 erfüllen.

Aufgabe der vorliegenden Erfindung war es somit glasfaserverstärkte Polycarbonatzusammensetzungen mit einer Kombination aus hoher Steifigkeit und Zähigkeit in axialem und biaxialem Verhalten, gutem thermischen und rheologische Verhalten und einer Flammwidrigkeit von UL94 V0 bei 1,2 mm und 1,5 mm Wandstärke und erhöhter VicatTemperatur bereitzustellen, die die Nachteile der aus dem Stand der Technik bekannten Zusammensetzungen nicht aufweisen. Insbesondere eignen sich die Zusammensetzungen zur Herstellung von Rahmen für LCD-Bildschirmen und Gehäuseteilen für den EE-Markt. Darüber hinaus sollten die Zusammensetzungen ein HDT-A edgewise und flatwise von > 135°C aufweisen.

Überraschenderweise wurde nun gefunden, dass die oben genannten Eigenschaften erhalten werden, wenn Polycarbonatzusammensetzungen gemäß Anspruch 1 der vorliegenden Erfindung eingesetzt werden.

Die so zusammengesetzten Formmassen zeichnen durch gute mechanische Eigenschaften sowie eine gute Zähigkeit und gutes rheologisches und thermisches Verhalten bei verbesserter Flammwidrigkeit und hoher Vicattemperatur aus.

Die flammwidrige, thermoplastische Formmassen bestehen aus
A) 41,500 bis 94,899 Gew.-Teile, vorzugsweise 60,000 bis 93,000 Gew.-Teile, besonders bevorzugt 74,000 bis 90,000Gew.-Teile mindestens eines aromatischen, mit Phenolen gecapten Polycarbonats, wobei das Polycarbonat mit p-ter.-Butlyphenol terminiert ist,
B) 0,001 bis 1,000 Gew.-Teile, bevorzugt 0,050 bis 0,800 Gew.-Teile, weiter bevorzugt 0,100 bis 0,600 Gew.-Teile, besonders bevorzugt 0,100 bis 0,300 Gew.-Teile, mindestens eines spezifischen Flammschutzmittels,
C) 0,05 bis 1,50 Gew.-Teilen, bevorzugt 0,10 bis 1,00 Gew.-Teilen, weiter bevorzugt 0,15 bis 0,90 Gew.-Teilen, weiter bevorzugt von 0,15 bis 0,50 Gew.-Teilen, mindestens eines UV-Absorbers, vorzugsweise Tinuvin 312, Tinuvin 360 und Tinuvin 329, besonders bevorzugt Tinuvin 312,
D) 5,0 bis 40,0 Gew.-Teilen, bevorzugt 6,0 bis 30,0 Gew.-Teilen, weiter bevorzugt 7,0 bis 20,0 Gew.-Teilen, mindestens einer Glasfaser,
E) 0,00 Gew.-Teile bis 1,00 Gew.-Teile, weiter bevorzugt 0,10 Gew.-Teile bis 0,75 Gew.-Teile, besonders bevorzugt 0,15 Gew.-Teile bis 0,60 Gew.-Teile, und ganz besonders bevorzugt 0,20 Gew.-Teile bis 0,50 Gew.-Teile mindestens eines Entformungsmittels,
F) 0,05 Gew.% bis 5,00 Gew.%, bevorzugt 0,10 Gew.% bis 1,00 Gew.%, besonders bevorzugt 0,10 Gew.% bis 0,80 Gew.% mindestens eines Antidrippingmittels.
G) 0 bis 10,00 Gew.-Teile, bevorzugt 0,10 bis 8,00 Gew.-Teile, besonders bevorzugt 0,20 bis 3,00 Gew.-Teile weitere übliche Additive, ausgewählt aus der Gruppe der Antioxidantien, Thermostabilisatoren, optische Aufheller und Lichtstreumittel sowie Pigmente und/oder Farbstoffe, wobei die Summe der Gewichtsteile der Komponenten A) bis G) sich zu 100 Gewichtsteilen addiert.

Ferner können in der vorliegenden Erfindung genannten bevorzugte Ausführungsformen miteinander kombiniert werden und sind nicht ausschließlich als alleinstehende Modifikation anzusehen.

### Komponente A)

Polycarbonate im Sinn der vorliegenden Erfindung sind sowohl Homopolycarbonate als auch Copolycarbonate; die Polycarbonate können in bekannter Weise linear oder verzweigt sein.

Die Herstellung der Polycarbonate erfolgt in bekannter Weise aus Diphenolen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schliesslich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha - alpha '-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate ist nur ein Diphenol eingesetzt, im Fall der Copolycarbonate sind mehrere Diphenole eingesetzt.

Geeignete Kohlensäurederivate sind beispielsweise Phosgen oder Diphenylcarbonat.

Geeignete Kettenabbrecher, die bei der Herstellung der erfindungsgemß verwendbaren Polycarbonate eingesetzt werden, ist p-tert.-Butylphenol.

In einer alternativen Ausführungsform können auch p-tert.-Butylphenol und Phenol im Mol-Verhältnis 9:1 bis 1:9, vorzugsweise 9:1 eingesetzt werden.

Die Menge an einzusetzendem Kettenabbrecher beträgt bevorzugt 0,1 bis 5 Mol%, bezogen auf Mole an jeweils eingesetzten Diphenolen. Die Zugabe der Kettenabbrecher kann vor, während oder nach der Umsetzung mit einem Kohlesäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri(4-hydroxyphenyl)-heptan, 1,3,5-Tri(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenylisopropyl)-phenol, 2,6-Bis-(2-hydroxy-5'-methyl-benzyl)-4-methylphenol, 2-(4-hydroxyphenyl)-2-(2,4-dihydroxyphenyl)-propan, Hexa-(4(4-hydroxyphenylisopropyl)-phenyl)-orthoterephthalsäureester, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol%, bezogen wiederum auf Mole an jeweils eingesetzten Diphenolen.

Die Verzweiger können entweder mit den Diphenolen und den Kettenabbrechern in der wässrig alkalischen Phase vorgelegt werden, oder in einem organischen Lösungsmittel gelöst vor der Phosgenierung zugegeben werden. Im Fall des Umesterungsverfahrens werden die Verzweiger zusammen mit den Diphenolen eingesetzt.

Die aromatischen Polycarbonate der vorliegenden Erfindung besitzen Gewichtsmittelmolekulargewichte Mw (ermittelt durch Gelpermeationschromatographie und Eichung mit Polycarbonatstandard) zwischen 5000 und 200.000 g/mol, vorzugsweise zwischen 18.000-36.000 g/mol, weiter bevorzugt zwischen 22.000-34.000 g/mol, noch weiter bevorzugt zwischen 24.000-32.000 g/mol, und besonders bevorzugt zwischen 26.000-32.000 g/mol.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan jeweils mit p-tert.-Butylphenol-Endgruppen (BUP).

### Komponente B)

Geeignete Flammschutzmittel im Sinne der vorliegenden Erfindung sind Alkali- bzw. Erdalkalisalze von aliphatischen bzw. aromatischen Sulfonsäure-, Sulfonamid- und Sulfonimidderivaten z.B. Kaliumperfluorbutansulfonat, Kaliumdiphenyl-sulfonsulfonat, N-(p-tolylsulfonyl-)-p-toluolsulfimid-Kaliumsalz, N-(N'-Benzylaminocabonyl)-sulfanylimid-Kaliumsalz.

Salze die gegebenenfalls in den erfindungsgemäßen Formmassen verwendet werden können, sind beispielsweise: Natrium- oder Kaliumperfluorbutansulfat, Natrium- oder Kaliumperfluormethansulfonat, Natrium- oder Kaliumperfluoroctansulfat, Natrium- oder Kalium-2,5-dichlorbenzolsulfat, Natrium- oder Kalium-2,4,5-trichlorbenzolsulfat, Natrium- oder Kaliummethylphosphonat, Natrium- oder Kalium-(2-phenyl-ethylen)-phosphonat, Natrium- oder Kaliumpentachlorbenzoat, Natrium- oder Kalium-2,4,6-trichlorbenzoat, Natrium- oder Kalium-2,4-dichlorbenzoat, Lithiumphenylphosphonat, Natrium- oder Kalium-diphenylsulfonsulfonat, Natrium- oder Kalium-2-formylbenzolsulfonat, Natrium- oder Kalium-(N-benzolsulfonyl)-benzolsulfonamid. Trinatrium- oder Trikalium-hexafluoroaluminat, Dinatrium- oder Dikaliumhexafluorotitanat, Dinatrium- oder Dikalium-hexafluorosilikat, Dinatrium- oder Dikaliumhexafluorozirkonat, Natrium- oder Kalium-pyrophosphat, Natrium- oder Kaliummetaphosphat, Natrium- oder Kaliumtetrafluoroborat, Natrium- oder Kaliumhexafluorophosphat, Natrium- oder Kalium- oder Lithiumphosphat, N-(p-tolylsulfonyl-)-p-toluolsulfimid-Kaliumsalz, N-(N'-Benzyl¬amino¬carbonyl)-sulfanylimid-Kaliumsalz.

Bevorzugt werden Natrium- oder Kaliumperfluorbutansulfat, Natrium- oder Kaliumperfluoroctansulfat, Natrium- oder Kalium-diphenylsulfonsulfonat und Natrium oder Kalium-2,4,6-trichlorbenzoat und N-(p-Tolylsulfonyl-)-p-toluolsulfimid-Kaliumsalz, N-(N'-Benzylaminocabonyl)-sulfanylimid-Kaliumsalz. Ganz besonders bevorzugt sind Kalium-nonafluor-1-butansulfonat und Natrium- oder Kalium-diphenylsulfonsulfonat. Kalium-nona-fluor-1-butansulfonat ist u.a. als Bayowet®C4 (Firma Lanxess, Leverkusen, Deutschland, CAS-Nr. 29420-49-3), RM64 (Firma Miteni, Italien) oder als 3M™ Perfluorobutanesulfonyl Fluoride FC-51 (Firma 3M, USA) kommerziell erhältlich. Ebenfalls sind Mischungen der genannten Salze geeignet. Kalium-nona-fluor-1-butansulfonat wird besonders bevorzugt eingesetzt.

### Komponente C)

UV (Ultraviolett)-Stabilisatoren im Rahmen der vorliegenden Erfindung weisen eine möglichst geringe Transmission unterhalb 400 nm und eine möglichst hohe Transmission oberhalb von 400 nm auf. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin^{®} 234, BASF, Ludwigshafen), 2-(2'-Hydroxy-5'-(tert.-octyl)-phenyl)-benzotriazol (Tinuvin^{®} 329, BASF, Ludwigshafen), 2-(2'-Hydroxy-3'-(2-butyl)-5'-(tert.butyl)-phenyl)-benzotriazol (Tinuvin^{®} 350, BASF, Ludwigshafen), Bis-(3-(2H-benztriazolyl)-2-hydroxy-5-tert.-octyl)methan, (Tinuvin^{®} 360, BASF, Ludwigshafen), (2-(4,6-Diphenyl-1,3,5-triazin-2-yl)-5-(hexyloxy)-phenol (Tinuvin^{®} 1577, BASF, Ludwigshafen), sowie der Benzophenone 2,4-Dihydroxy-benzophenon (Chimasorb^{®} 22 , BASF, Ludwigshafen) und 2-Hydroxy-4-(octyloxy)-benzophenon (Chimassorb^{®} 81, BASF, Ludwigshafen), 2-Propenoic acid, 2-Cyano-3,3-diphenyl-, 2,2-Bis[[(2-cyano-1-oxo-3,3-diphenyl-2-propenyl)oxy]-methyl]-1,3-propanediylester (9CI) (Uvinul^{®} 3030, BASF AG Ludwigshafen), 2-[2-Hydroxy-4-(2-ethylhexyl)oxy]phenyl-4,6-di(4-phenyl)phenyl-1,3,5-triazine (CGX UVA 006, BASF, Ludwigshafen), Tetra-ethyl-2,2'-(1,4-phenylene-dimethylidene)-bismalonate (Hostavin® B-Cap, Clariant AG) oder N-(2-ethoxyphenyl)-N'-(2-ethylphenyl)-Ethanediamide (Tinuvin®) 312, CAS-Nr. 23949-66-8, BASF, Ludwigshafen)

Besonders bevorzugt als UV-Stabilisator ist Tinuvin®) 312.

Es können auch Mischungen dieser Ultraviolett-Absorber eingesetzt werden.

### Komponente D)

Füllstoffe im Sinne der vorliegenden Erfindung sind Glasfasern

Bevorzugt werden Schnittglasfasern verwendet, die aus M-, E-, A-, S-, R- oder C-Glas herstellt werden, wobei E-, oder C-Glas weiter bevorzugt sind.

Der Durchmesser der Fasern beträgt bevorzugt 5 bis 25 µm, weiter bevorzugt 6 bis 20 µm, besonders bevorzugt 7 bis 17 µm.

Die Schnittglasfasern weisen vor Compoundierung bevorzugt eine Länge von 3 mm bis 6 mm auf.

Die verwendeten Glasfasern zeichnen sich dadurch aus, dass die Auswahl der Faser nicht durch die Wechselwirkungscharakteristik der Faser mit der Polycarbonatmatrix beschränkt ist.

Sowohl für eine starke Anbindung an die Polymermatrix, als auch bei einer nicht-anbindenden Faser zeigt eine Verbesserung der erfindungsgemäßen Eigenschaften der Zusammensetzungen.

Eine starke Anbindung der Glasfaser an die Polymermatrix ist an den Tieftemperaturbruchoberflächen bei rasterelektronenmikroskopischen Aufnahmen zu erkennen, wobei die größte Anzahl der gebrochenen Glasfasern auf derselben Höhe wie die Matrix gebrochen sind und nur vereinzelt Glasfasern aus der Martix herausstehen. Rasterelektronenmikroskopische Aufnahmen zeigen für den umgekehrten Fall der nicht-anbindenen Charakteristik, dass die Glasfasern im Tieftemperaturbruch aus der Matrix stark herausstehen oder vollständig herausgeglitten sind.

### Komponente E

Die verwendeten Entformungsmittel E) sind Ester aliphatischer langkettiger Carbonsäuren mit ein- oder mehrwertigen aliphatischen und/oder aromatischen Hydroxyverbindungen. Besonders bevorzugt verwendete aliphatische Carbonsäureester sind Verbindungen der allgemeinen Formel (III):

(**R₄-CO**-**O**)ₒ-**R₅**-(**OH**)**ₚ mit o = 1 bis 4 und p = 3 bis 0** **(III)**

wobei R4 ein aliphatischer gesättigter oder ungesättigter, linearer, cyclischer oder verzweigter Alkylrest ist und R5 ein Alkylenrest eines 1- bis 4-wertigen aliphatischen Alkohols R5-(OH)o+p ist.

Besonders bevorzugt für R4 sind C1-C18 Alkylreste. C1-C18-Alkyl steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1-Methylpentyl, 2-Methylpentyl, 3 -Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl oder 1-Ethyl-2-methylpropyl, n-Heptyl und n-Octyl, Pinakyl, Adamantyl, die isomeren Menthyle, n-Nonyl, n-Decyl, n-Dodecyl, n-Tridecyl, n-Tetradecyl, n-Hexadecyl oder n-Octadecyl.

Alkylen steht für einen geradkettigen, zyklischen, verzweigten oder unverzweigten C1-C18 Alkylen-Rest. C1-C18-Alkylen steht beispielsweise für Methylen, Ethylen, n-Propylen, isoPropylen, n-Butyen, n-Pentylen, n-Hexylen, n-Heptylen, n-Octylen, n-Nonylen, n-Decylen, n-Dodecylen, n-Tridecylen, n-Tetradecylen, n-Hexadecylen oder n-Octadecylen.

Bei Estern von mehrwertigen Alkoholen können auch freie, nicht veresterte OH-Gruppen vorhanden sein. Erfindungsgemäß geeignete aliphatische Carbonsäureester sind z.B.: Glycerinmonostearat, Palmitylpalmitat und Stearylstearat. Es können auch Gemische verschiedener Carbonsäureester der Formel (III) eingesetzt werden. Bevorzugt verwendete Carbonsäureester sind Ester von Pentaerythrit, Glycerin, Trimethylolpropan, Propandiol, Stearylalkohol, Cetylalkohol oder Myristylalkohol mit Myristin-, Palmitin-, Stearin- oder Montansäure und Gemische daraus. Besonders bevorzugt sind Pentaerythrittetrastearat, Stearylstearat und Propandioldistearat, bzw. Gemische, daraus und am stärksten bevorzugt Pentaerythrittetrastearat.

Als Antitropfmittel der Komponente (F) kann den Formmassen zusätzlich Polytetrafluorethylen (PTFE) zugefügt werden. Letzteres ist in diversen Produktqualitäten kommerziell verfügbar. Hierzu zählen Additive wie Hostaflon® TF2021 oder aber PTFE-Blends wie Metablen® A-3800 (ca. 40% PTFE CAS 9002-84-0 und ca. 60 % Methylmethacrylat/Butylacrylat Copolymer CAS 25852-37-3 von Misubishi-Rayon) oder Blendex® B449 (ca. 50% PTFE und ca. 50 % SAN [aus 80 % Styrol und 20 % Acrylnitril]) der Firma Chemtura. Bevorzugt wird Blendex® B449 verwendet

Im Rahmen der vorliegenden Erfindung kann PTFE optional in Mengen von 0,05 Gew.% bis 5 Gew.%, bevorzugt 0,1 Gew.% bis 1,0 Gew.%, besonders bevorzugt 0,1 Gew.% bis 0,5 Gew.% jeweils bezogen auf die Gesamtzusammensetzung berechnet auf reines PTFE eingesetzt werden.

Die erfindungsgemäßen Polymer-Zusammensetzungen können neben den erfindungsgemäßen Stabilisatoren optional noch weitere übliche Polymeradditive als Komponente G) enthalten, wie z.B. die in EP-A 0 839 623, WO-A 96/15102, EP-A 0 500 496 oder "Plastics Additives Handbook", Hans Zweifel, 5th Edition 2000, Hanser Verlag, München) beschriebenen Antioxidantien, Thermostabilisatoren, von B) verschiedene Flammschutzmittel, optischen Aufheller und Lichtstreumittel in den für die jeweiligen Thermoplasten üblichen Mengen.

Ferner können die erfindungsgemäßen Polymer-Zusammensetzungen Pigmente und/oder Farbstoffe in den üblichen Mengen als Komponente G) enthalten.

Als Thermostabilisatoren gemäß Komponente (G), eignen sich bevorzugt Triphenylphosphin, Tris-(2,4-di-tert-butylphenyl)phosphit (Irgafos 168), Tetrakis-(2,4-di-tert.-butylphenyl)-[1,1 biphenyl]-4,4'-diylbisphosphonit, Trisoctylphosphat, Octadecyl-3-(3,5-di-tert-butyl-4-hydroxyphenyl)-propionat (Irganox 1076), Bis-(2,4-dicumylphenyl)-pentaerythritoldiphosphit (Doverphos S-9228), Bis-(2,6-di-tert.butyl-4-methylphenyl)-pentaerythritoldiphosphit (ADK STAB PEP-36). Sie werden allein oder im Gemisch (z. B. Irganox B900 (Gemisch aus Irganox 168 und Irganox 1076 im Verhältnis 1:3) oder Doverphos S-92228 mit Irganox B900 bzw. Irganox 1076) eingesetzt.

Die Herstellung der erfindungsgemäßen Polymer-Zusammensetzungen enthaltend die Komponenten A) bis G) erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen aus Granulaten oder Granulaten und Pulvern mit den erfindungsgemäßen Zusätzen verwendet werden.

Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind.

Insbesondere können hierbei die Additive der erfindungsgemäßen Zusammensetzung durch bekannte Verfahren oder als Masterbatch eingebracht werden.

Die Verwendung von Masterbatchen ist insbesondere zum Einbringen der Additive bevorzugt, wobei insbesondere Masterbatche auf Basis der jeweiligen Polymermatrix verwendet werden.

In diesem Zusammenhang kann die Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die Zusammenführung und Durchmischung einer Vormischung in der Schmelze kann auch in der Plastifiziereinhiet einer Spritzgußmaschine erfolgen. Hierbei wird die Schmelze im anschließenden Schritt direkt in einen Formkörper überführt.

Die Herstellung der Kunststoffformteile kann vorzugsweise durch Spritzguß erfolgen.

Von Interesse ist auch die Verwendung der erfindungsgemäßen Kunststoffzusammensetzung zur Herstellung von Mehrschichtsystemen. Hierbei wird die erfindungsgemäße Kunststoffzusammensetzung in einer oder mehreren Schicht(en) auf einen geformten Gegenstand aus einem Kunststoff aufgebracht. Das Aufbringen kann zugleich mit oder unmittelbar nach der Formgebung des Formkörpers geschehen, zum Beispiel durch Hinterspritzen einer Folie, Coextrusion oder Mehrkomponentenspritzguß. Das Aufbringen kann aber auch auf den fertig geformten Grundkörper geschehen, z.B. durch Lamination mit einem Film, Umspritzen eines vorhandenen Formkörpers oder durch Beschichtung aus einer Lösung.

Ferner betrifft die vorliegende Erfindung die Verwendung von erfindungsgemäßen Zusammensetzungen zur Herstellung dünnwandiger, steifer Bauteile, insbesondere Rahmenbauteile für LCD / LED Geräte, im EE -Bereich.

### Beispiele

### Komponente A-1

BUP-gecaptes, lineares Polycarbonate auf Basis Bisphenol-A mit einem MVR von 10 (gemäß ISO 1133, bei 300°C und 1,2 kg Belastung).

### Komponente A-2

Lineares Polycarbonate auf Basis Bisphenol-A mit einem MVR von 8 (gemäß ISO 1133, bei 300°C und 1,2 kg Belastung).

### Komponente B

Kaliumperfluor-1-butansulfonat kommerziell erhältlich als Bayowet® C4 der Firma Lanxess, Leverkusen, Deutschland, CAS-Nr. 29420-49-3.

### Komponente C

N-(2-ethoxyphenyl)-N'-(2-ethylphenyl)-Ethanediamide (Tinuvin^{®} 312, CAS-Nr. 23949-66-8, BASF, Ludwigshafen)

### Komponente D-1

CS 7968, geschnittene Kurzglasfasern (anbindend) der Firma Lanxess AG mit einem durchschnittlichen Faserdurchmesser von 11 µm und einer durchschnittlichen Faserlänge von 4,5 mm.

### Komponente D-2

CS108F-14P, geschnittene Kurzglasfasern (nicht anbindend) der Firma 3B mit einem durchschnittlichen Faserdurchmesser von 14 µm, einer durchschnittlichen Faserlänge von 4,0 mm.

### Komponente E

Pentaerythrittetrastearat als Gleit-/Entformungsmittel

### Komponente F

Polytetrafluorethylen (Blendex® B449 (ca. 50% PTFE und ca. 50 % SAN [aus 80 % Styrol und 20 % Acrylnitril] der Firma Chemtura).

Die Schlagzähigkeit nach Charpy wurde nach ISO 179/1eU an einseitig angespritzten Prüfstäben der Dimension 80 x 10 x 4 mm bei RT und -40°C gemessen.

Der Vicat B/50 als Maß für die Wärmeformbeständigkeit wird bestimmt gemäß ISO 306 an Prüfkörpern der Abmessung 80 x 10 x 4 mm mit einer Stempellast von 50 N und einer Aufheizgeschwindigkeit von 50°C/h.

Die mittlere Teilchengröße d₅₀ ist der Durchmesser, oberhalb und unterhalb dessen jeweils 50 Gew.-% der Teilchen liegen.

Die maximale Teilchengröße d₉₅ ist der Durchmesser, unterhalb dessen 95 Gew.-% der Teilchen liegen.

Die entsprechenden Durchmesser wurden durch Windsichten bestimmt.

Das Brandverhalten wird nach UL 94V an Stäben der Abmessung 127 mm x 12,7 mm x 1,0 mm, 127 x 12,7 x 1,2 mm, 127 x 12,7 x 1,5 mm gemessen.

Das Brandverhalten wird nach UL 94 5V an Stäben der Abmessung 127 mm x 12,7 mm x 3,0 mm und Platten der Abmessung 105 mm x 105 mm x 3,0 mm gemessen. Nicht bestanden bedeutet durchgefallen in Stab- und Plattenprüfung, class A bestanden bedeutet bestehen der Stab- und Plattenprüfung. Class B bestanden bedeutet bestehen der Stabprüfung und durchfallen der Plattenprüfung.

Der E-Modul und die Bruchdehnung wurden gemäß ISO 527 an einem einseitig angespritzten Schulterstäben mit einem Kern der Dimension 80 x 10 x 4 mm gemessen.

Die Bestimmung des Schmelzvolumenrate (MVR) erfolgt nach ISO 1133 (bei 300 °C; 1,2 kg).

Die Bestimmung der Kennwerte des Durchstoßexperimentes erfolgt bei -20°C nach ISO 6603-2 an Prüfplatten von 60mm x 60mm x 2 mm.

Die Bestimmung der HDT-A edgwise erfolgte nach ISO 75 mit einer Auflagekraft von 1,80 MPa an einem Prüfkörper der Maße 120 mm x 10 mm x 4 mm an der 4 mm Kante mit einer Stützweite von 100 mm.

Die Bestimmung der HDT-A flatwise erfolgte nach ISO 75 mit einer Auflagekraft von 1,80 MPa an einem Prüfkörper der Maße 80 mm x 10 mm x 4 mm an der 10 mm Kante mit einer Stützweite von 64 mm.

**Tabelle 1:**

| Beispiel | 1 | 2 | 3 | 4 | 5 | 6 | 7 | 8 | 9 | 10 | 11 | 12 |
|---|---|---|---|---|---|---|---|---|---|---|---|---|
| A-1 w.t. % | 88,750 | 86,750 | 84,750 | 88,750 | 86,750 | 84,750 | | | | | | |
| A-2 w.t. % | | | | | | | 88,750 | 86,750 | 84,750 | 88,750 | 86,750 | 84,750 |
| B w.t. % | 0,2 | 0,2 | 0,2 | 0,2 | 0,2 | 0,2 | 0,2 | 0,2 | 0,2 | 0,2 | 0,2 | 0,2 |
| C w.t. % | 0,25 | 0,25 | 0,25 | 0,25 | 0,25 | 0,25 | 0,25 | 0,25 | 0,25 | 0,25 | 0,25 | 0,25 |
| D-1 w.t. % | 10 | 12 | 14 | | | | 10 | 12 | 14 | | | |
| D-2 w.t. % | | | | 10 | 12 | 14 | | | | 10 | 12 | 14 |
| E w.t. % | 0,3 | 0,3 | 0,3 | 0,3 | 0,3 | 0,3 | 0,3 | 0,3 | 0,3 | 0,3 | 0,3 | 0,3 |
| F w.t. % | 0,3 | 0,3 | 0,3 | 0,3 | 0,3 | 0,3 | 0,3 | 0,3 | 0,3 | 0,3 | 0,3 | 0,3 |
| MVR[cm³/10min] | 7,0 | 6,7 | 6,7 | 7,0 | 6,3 | 6,5 | 5,9 | 5,9 | 5,5 | 6,0 | 5,7 | 5,3 |
| VICAT | 145,9 | 146,1 | 146,0 | 144,2 | 144,0 | 144,5 | 143,3 | 143,8 | 143,4 | 141,9 | 141,5 | 142,4 |
| HDT-A edgewise | 135,2 | 136,1 | 137,0 | 132,6 | 134,2 | 135,0 | 130,9 | 133,1 | 133,3 | 130,6 | 129,7 | 132,6 |
| HDT-A flatwise | 135,8 | 137,4 | 137,9 | 135,1 | 135,9 | 136,8 | 133,9 | 134,9 | 135,4 | 133,1 | 133,4 | 134,6 |
| Charpy-Schlagzähigkeit RT kJ/mm² | 78 | 66 | 55 | 174 | 151 | 135 | 78 | 74 | 64 | 161 | 156 | 136 |
| E-Modul[N/mm²] | 3651 | 4102 | 4463 | 3750 | 4158 | 4445 | 3739 | 4115 | 4397 | 3843 | 4162 | 4601 |
| UL94 5V 3,0 mm | class A | class A | class A | class A | class A | class A | class A | class A | class A | class A | class A | class A |
| UL 94 V 1,2mm | V0 | V0 | V0 | V0 | V0 | V0 | V0 | V0 | V0 | V0 | V0 | V1 |
| UL 94 V 1,5mm | V0 | V0 | V0 | V0 | V0 | V0 | V0 | V0 | V0 | V0 | V0 | V0 |

## Patentansprüche

1. Verwendung flammwidriger, thermoplastischer Formmassen bestehend aus
A) 41,500 bis 94,899 Gew.-Teilen mindestens eines aromatischen Polycarbonats mit Phenolendgruppen, wobei das Polycarbonat mit p-tert.-Butylphenol terminiert ist,
B) 0,001 bis 1,000 Gew.-Teilen mindestens eines Flammschutzmittels, ausgewählt aus der Gruppe der Alkali-/Erdalkalisalze von aliphatischen/aromatischen Sulfonsäure-, Sulfonamid- und Sulfonimidderivaten, Natrium- oder Kaliumperfluorbutansulfat, Natrium- oder Kaliumperfluoroctansulfat, Natrium- oder Kalium-2,5-dichlorbenzolsulfat, Natrium- oder Kalium-2,4,5-trichlorbenzolsulfat, Natrium- oder Kaliummethylphosphonat, Natrium- oder Kalium-(2-phenyl-ethylen)-phosphonat, Natrium- oder Kaliumpentachlorbenzoat, Natrium- oder Kalium-2,4,6-trichlorbenzoat, Natrium- oder Kalium-2,4-dichlorbenzoat, Lithiumphenylphosphonat, Trinatrium- oder Trikalium-hexafluoroaluminat, Dinatrium- oder Dikaliumhexafluorotitanat, Dinatrium- oder Dikalium-hexafluorosilikat, Dinatrium- oder Dikaliumhexafluorozirkonat, Natrium- oder Kalium-pyrophosphat, Natrium- oder Kaliummetaphosphat, Natrium- oder Kaliumtetrafluoroborat, Natrium- oder Kaliumhexafluorophosphat, Natrium- oder Kalium- oder Lithiumphosphat,
C) 0,05 bis 1,50 Gew.-Teilen mindestens eines UV-Absorbers,
D) 5,0 bis 40,0 Gew.-Teilen mindestens einer Glasfaser,
E) 0,00 Gew.-Teilen bis 1,00 Gew.-Teilen mindestens eines Entformungsmittels,
F) 0,05 Gew.-Teilen bis 5,00 Gew.-Teilen mindestens eines Antidrippingmittels,
G) 0,0 - 10,0 Gew.-Teilen weiterer üblicher Additive, ausgewählt aus der Gruppe der Antioxidantien, Thermostabilisatoren, optischen Aufheller und Lichtstreumittel sowie Pigmente und/oder Farbstoffe,
wobei die Summe der Gewichtsteile der Komponenten A) bis G) sich zu 100 Gewichtsteilen addiert,
zur Herstellung von Formteilen der Dicke 1,2 mm bis 1,5 mm im Elektro/Elektronik-Bereich, welche die Anforderungen der Brandschutzklasse UL94 V0 erfüllen.

2. Verwendung gemäß Anspruch 1, **dadurch gekennzeichnet, dass** Komponente D) in einem Anteil von 7,0 bis 20,0 Gew.-Teilen enthalten ist.

3. Verwendung gemäß Anspruch 1 oder 2, **dadurch gekennzeichnet, dass** Komponente G) in einem Anteil von 0,20 bis 3,0 Gew.-Teilen enthalten ist.

4. Verwendung gemäß einem der Ansprüche 1 bis 3, **dadurch gekennzeichnet, dass** Komponente C) in einem Anteil von 0,15 bis 1,50 Gew.-Teilen enthalten ist.

5. Verwendung nach einem der vorhergehenden Ansprüche, **dadurch gekennzeichnet, dass** der UV-Absorber ausgewählt ist aus 2-(2'-Hydroxy-5'-(tert.-octyl)-phenyl)-benzotriazol, Bis-(3-(2H-benztriazolyl)-2-hydroxy-5-tert.-octyl)methan und N-(2-ethoxyphenyl)-N'-(2-ethylphenyl)-ethandiamid.

6. Verwendung nach einem der vorhergehenden Ansprüche, **dadurch gekennzeichnet, dass** der UV-Absorber N-(2-ethoxyphenyl)-N'-(2-ethylphenyl)-ethandiamid ist.

7. Verwendung gemäß einem der vorhergehenden Ansprüche, **dadurch gekennzeichnet, dass** das Polycarbonat mit p-tert.-Butylphenol und Phenol im Molverhältnis 9:1 bis 1:9 terminiert ist.

8. Verwendung nach einem der vorhergehenden Ansprüche, **dadurch gekennzeichnet, dass** die Glasfaser eine Schnittglasfaser ist.

9. Verwendung nach Anspruch 8, **dadurch gekennzeichnet, dass** die Schnittglasfaser aus E-, oder C-Glas herstellt ist, einen Faserdurchmesser von 5 bis 25 µm aufweist und die Schnittglasfasern vor Compoundierung bevorzugt eine Länge von 3 mm bis 6 mm aufweisen.

## Claims

1. Use of flame-resistant, thermoplastic moulding compositions comprising
A) 41.500 to 94.899 parts by wt. of at least one aromatic polycarbonate with phenol end groups, wherein the polycarbonate is terminated with p-tert-butylphenol,
B) 0.001 to 1.000 part by wt. of at least one flameproofing agent, chosen from the group of the alkali metal/alkaline earth metal salts of aliphatic/aromatic sulfonic acid, sulfonamide and sulfonimide derivatives, sodium or potassium perfluorobutane-sulfate, sodium or potassium perfluorooctane-sulfate, sodium or potassium 2,5-dichlorobenzene-sulfate, sodium or potassium 2,4,5-trichlorobenzene-sulfate, sodium or potassium methyl-phosphonate, sodium or potassium (2-phenylethylene)-phosphonate, sodium or potassium pentachlorobenzoate, sodium or potassium 2,4,6-trichlorobenzoate, sodium or potassium 2,4-dichlorobenzoate, lithium phenyl-phosphonate, trisodium or tripotassium hexafluoroaluminate, disodium or dipotassium hexafluorotitanate, disodium or dipotassium hexafluorosilicate, disodium or dipotassium hexafluorozirconate,
sodium or potassium pyrophosphate, sodium or potassium metaphosphate, sodium or potassium tetrafluoroborate, sodium or potassium hexafluorophosphate, sodium or potassium or lithium phosphate,
C) 0.05 to 1.50 parts by wt. of at least one UV absorber,
D) 5.0 to 40.0 parts by wt. of at least one glass fibre,
E) 0.00 part by wt. to 1.00 part by wt. of at least one mould release agent,
F) 0.05 part by wt. to 5.00 parts by wt. of at least one antidripping agent,
G) 0.0 - 10.0 parts by wt. of further conventional additives chosen from the group of the antioxidants, heat stabilizers, optical brighteners and light-scattering agents and also pigments and/or dyestuffs,
wherein the sum of the parts by weight of components A) to G) adds up to 100 parts by weight,
for the production of shaped parts of thickness 1.2mm to 1.5mm in the electrical/electronics sector which meet the requirements of UL94 fire protection class V0.

2. Use according to claim 1, **characterized in that** component D) is present in a content of from 7.0 to 20.0 parts by wt.

3. Use according to claim 1 or 2, **characterized in that** component G) is present in a content of from 0.20 to 3.0 parts by wt.

4. Use according to one of claims 1 to 3, **characterized in that** component C) is present in a content of from 0.15 to 1.50 parts by wt.

5. Use according to one of the preceding claims, **characterized in that** the UV absorber is chosen from 2-(2'-hydroxy-5'-(tert-octyl)phenyl) benzotriazole, bis (3-(2H-benzotriazolyl)-2-hydroxy-5-tert-octyl)methane and N-(2-ethoxyphenyl)-N'-(2-ethylphenyl)ethanediamide.

6. Use according to one of the preceding claims, **characterized in that** the UV absorber is N-(2-ethoxyphenyl)-N'-(2-ethylphenyl)ethanediamide.

7. Use according to one of the preceding claims, **characterized in that** the polycarbonate is terminated with p-tert-butylphenol and phenol in the molar ratio of 9:1 to 1:9.

8. Use according to one of the preceding claims, **characterized in that** the glass fibre is a cut glass fibre.

9. Use according to claim 8, **characterized in that** the cut glass fibre is produced from E- or C-glass and has a fibre diameter of from 5 to 25 µm and the cut glass fibres preferably have a length before compounding of from 3 mm to 6 mm.

## Revendications

1. Utilisation de mélanges à mouler thermoplastiques retardateurs de flamme, consistant en
A) 41,500 à 94,899 parties en poids d'au moins un polycarbonate aromatique ayant des groupes terminaux phénol, le carbonate étant terminé par du p-tert-butylphénol,
B) 0,001 à 1000 parties en poids d'au moins un agent d'ignifugation, choisi dans le groupe des sels de métaux alcalins/alcalino-terreux de dérivés aliphatiques/aromatiques d'acides sulfoniques, de sulfonamides et de sulfonimides, du perfluorobutanesulfate de sodium ou de potassium, du perfluorooctanesulfate de sodium ou de potassium, du 2,5-dichlorobenzènesulfate de sodium ou de potassium, du 2,4,5-trichlorobenzènesulfate de sodium ou de potassium, du méthylphosphonate de sodium ou de potassium, du (2-phényl-éthylène)-phosphonate de sodium ou de potassium, du pentachlorobenzoate de sodium ou de potassium, du 2,4,6-trichlorobenzoate de sodium ou de potassium, du 2,4-dichlorobenzoate de sodium ou de potassium, du phénylphosphonate de lithium, de l'hexafluoroaluminate trisodique ou tripotassique, de l'hexafluorotitanate disodique ou dipotassique, de l'hexafluorosilicate disodique ou dipotassique, de l'hexafluorozirconate disodique ou dipotassique, du pyrophosphate de sodium ou de potassium, du métaphosphate de sodium ou de potassium, du tétrafluoroborate de sodium ou de potassium, de l'hexafluorophosphate de sodium ou de potassium, du phosphate de sodium ou de potassium ou de lithium,
C) 0,05 à 1,50 parties en poids d'au moins un absorbant UV,
D) 5,0 à 40,0 parties en poids d'au moins une fibre de verre,
E) 0,00 partie en poids à 1,00 partie en poids d'au moins un agent de démoulage,
F) 0,05 partie en poids à 5,00 parties en poids d'au moins un agent anti-égouttage,
G) 0,0 à 10,0 parties en poids d'autres additifs usuels, choisis dans le groupe des antioxydants, des thermostabilisants, des azurants optiques et des agents de diffusion de la lumière, ainsi que des pigments et/ou des colorants,
la somme des parties en poids des composants A) à G) étant de 100 parties en poids,
pour la fabrication de pièces moulées ayant une épaisseur de 1,2 mm à 1,5 mm dans le domaine électrique/électronique, qui satisfont aux exigences de la classe de tenue au feu UL94 V0.

2. Utilisation selon la revendication 1, **caractérisée en ce que** le composant D) est présent selon une proportion de 7,0 à 20,0 parties en poids.

3. Utilisation selon la revendication 1 ou 2, **caractérisée en ce que** le composant G) est présent selon une proportion de 0,20 à 3,0 parties en poids.

4. Utilisation selon l'une des revendications 1 à 3, **caractérisée en ce que** le composant C) est présent selon une proportion de 0,15 à 1,50 parties en poids.

5. Utilisation selon l'une des revendications précédentes, **caractérisée en ce que** l'absorbant UV est choisi parmi le 2-(2'-hydroxy-5'-(tert-octyl)-phényl)-benzotriazole, le bis(3-(2H-benzotriazolyl)-2-hydroxy-5-tert-octyl)méthane et le N-(2-éthoxyphényl)-N'-(2-éthylphényl)-éthanediamide.

6. Utilisation selon l'une des revendications précédentes, **caractérisée en ce que** l'absorbant UV est le N-(2-éthoxyphényl)-N'-(2-éthylphényl)-éthanediamide.

7. Utilisation selon l'une des revendications précédentes, **caractérisée en ce que** le polycarbonate est terminé par du p-tert-butylphénol et du phénol selon un rapport en moles de 9:1 à 1:9.

8. Utilisation selon l'une des revendications précédentes, **caractérisée en ce que** la fibre de verre est une fibre de verre coupée.

9. Utilisation selon la revendication 8, **caractérisée en ce que** la fibre de verre coupée est fabriquée en verre E ou en verre C, présente un diamètre de fibre de 5 à 25 µm, et les fibres de verre coupées présentent avant mélange de préférence une longueur de 3 mm à 6 mm.
